# EUROPÄISCHE PATENTSCHRIFT

(11) **EP 0 590 163 B1**
(45) Veröffentlichungstag und Bekanntmachung des Hinweises auf die Patenterteilung: **03.01.1996**
(21) Anmeldenummer: 92116126.1
(22) Anmeldetag: 21.09.1992
(51) Int. Cl.: G01D 5/38

(54) **Längen- oder Winkelmesseinrichtung**
Length or angle measuring device
Dispositif de mesure de longueurs ou d'angles

(43) Veröffentlichungstag der Anmeldung: 06.04.1994
(73) Patentinhaber: Dr. Johannes Heidenhain GmbH, D-83292 Traunreut (DE)
(72) Erfinder: Huber, Walter, W-8220 Traunstein (DE)

(56) Entgegenhaltungen:
- EP-A- 0 333 929
- EP-A- 0 446 691
- GB-A- 2 095 399
- JÖrg WILLHELM 'Dreigitterschrittgeber' 1978 , TECHNISCHE UNIVERSITÄT , HANNOVER

## Beschreibung

Die Erfindung bezieht sich auf eine Längen- oder Winkelmeßeinrichtung gemäß dem Oberbegriff des Anspruches 1.

Die Erfindung geht von dem aus der europäischen Patentschrift EP- 0 163 362 -B1 bekannten Stand der Technik aus. Dieser Stand der Technik zeigt ein Dreigitterinterferometer, welches in praktischen Anwendungen dadurch, daß eines der Gitter reflektierend ist, auf zwei Gitterstrukturen reduziert wird. Die Auswertung der interferierenden Teilstrahlenbündel ermöglicht die Messung der Größe und der Richtung der Relativverschiebung zwischen den beiden Gittern.

Eine Phasenverschiebung zwischen den von den Detektoren detektierten Teilstrahlenbündeln ist deshalb erforderlich.

In der Dissertation Willhelm, "Dreigitterschrittgeber", 1978 sowie in der GB-A-2 095 399 sind Lagemeßvorrichtungen beschrieben, bei denen die Teilungen der drei Gitter ein Verhältnis von 2:1:2 aufweisen. Die dort angegebenen Bemessungsregeln lassen nur eine begrenzte Auflösung zu.

Aus der EP-A-0 333 929 ist eine Dreigitter-Meßeinrichtung bekannt, bei der das erste und das dritte Gitter identisch und phasenbestimmend sind. Das Eingangs-Gitter wird schräg beleuchtet.

Eine weitere Druckschrift, EP-A-0 446 691, beschreibt eine Gitter-Meßeinrichtung mit mehreren Gittern, von denen zumindest eines eine sogenannte Überstruktur aufweist.

Die DE-23 16 248-A1 offenbart eine Vorrichtung zum Messen von Verschiebungen mit einem durchlässigen und einem reflektierenden Gitter. Drei Detektoren detektieren die Beugungsgruppen der nullten und der positiven und negativen zweiten Ordnung. Eine klare Offenbarung der Phasenbeziehungen zwischen denjenigen der Detektoren, die nicht die Beugungsgruppen der ersten Ordnung detektieren, detektierten Lichtstrahlen fehlt.

Der vorliegenden Erfindung liegt die Aufgabe zugrunde, eine Meßeinrichtung mit einer sehr hohen Auflösung und großzügiger Ausrichttoleranz unter Verwendung von feinen Gittern mit einer Teilungsperiode in der Größenordnung von einem halben Mikrometer am Maßstabgitter anzugeben. Hohe Modulationsgrade, keine Signaloberwellen und ein einfacher, kompakter Aufbau sind ebenso erwünscht, wie die Möglichkeit, die phasenverschobenen Signale mittels verschiedener Methoden zu erzeugen.

Diese Aufgabe wird von einer Längen- oder Winkelmeßeinrichtung mit den Merkmalen des Anspruches 1 gelöst.

Die besonderen Vorteile bestehen darin, daß mit sehr feinen Teilungsperioden des Maßstabgitters gearbeitet werden kann, so daß bereits vor einer späteren Signalinterpolation eine hohe Auflösung erzielt wird.

Die Erfindung wird nun anhand eines Beispiels und seiner Varianten unter Bezug auf die beiliegenden Zeichnungen beschrieben.

Dabei zeigt:
- Figur 1: ein optisches Schaubild einer erfindungsgemäßen Vorrichtung zum Messen von Verschiebungen;
- Figur 2: ein schematisches optisches Schaubild;
- Figur 3: ein optisches Schaubild mit ausgedehnter Lichtquelle und
- Figur 4: eine schematisch dargestellte Abtastplatte mit zwei unterschiedlichen Gitterstrukturen.

### Einzelbeschreibung der Zeichnungen

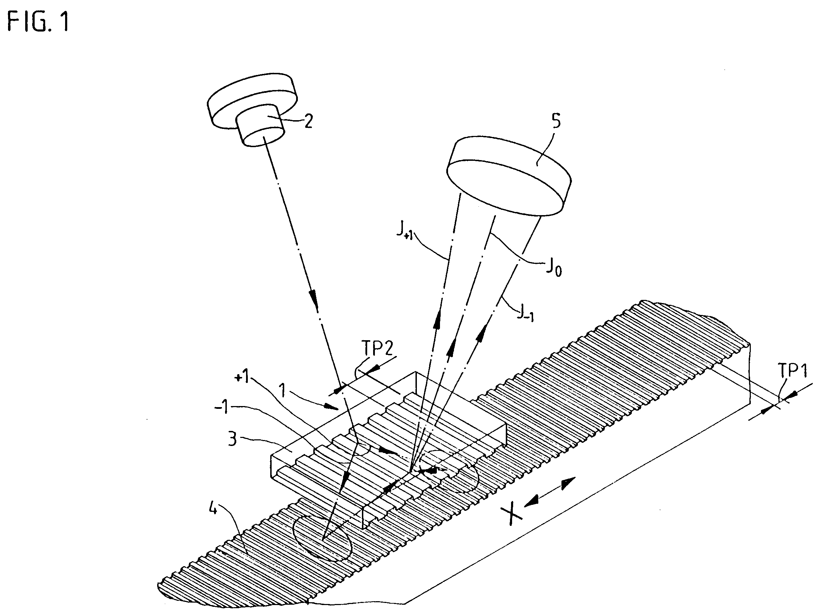

Gemäß der Darstellung in Figur 1 enthält eine Längenmeßeinrichtung 1 eine Lichtquelle 2, ein Abtastgitter 3, ein reflektierendes Maßstabgitter 4 und einen Fotodetektor 5, der die Signalstrahlenbündel J₀, J₊₁, J₋₁ detektiert. In einer praktischen Ausführungsform würden die Bauteile 2, 3 und 5 an einem gegenüber dem reflektierenden Maßstabgitter 4 verschiebbaren Lesekopf angebracht sein. Die elektrischen Ausgangssignale des Fotodetektors 5 bilden ein Maß für die Richtung und Größe der Verschiebung des Lesekopfes gegenüber dem ortsfesten Maßstabgitter 4. Eine Linear- oder Winkelverschiebung zwischen den Elementen 3 und 4 kann bei entsprechendem Aufbau gemessen werden.

Die Besonderheit der gezeigten Längenmeßeinrichtung liegt darin, daß als Lichtquelle 2 eine LED (Lichtemittierende Diode), die Licht mit bestimmten Kohärenzeigenschaften aussendet, verwendet wird.

Das Abtastgitter 3 weist eine Teilungsperiode TP2 auf, die näherungsweise oder genau doppelt so groß ist wie die Teilungsperiode TP1 des Maßstabgitters 4. Wichtig ist dabei, daß das Verhältnis genau 2:1, oder näherungsweise 2:1 ist. Das gezeigte Maßstabgitter 4 soll eine Teilungsperiode TP1 von 0,5µm haben, das zugehörige Abtastgitter 3 jedoch eine Teilungsperiode TP2 von 0,9982µm. Allerdings könnte diese Teilungsperiode auch 1µm oder 1,0018µm groß bzw. fein sein.

Das Maßstabgitter 4 und das Abtastgitter 3 sind parallel zueinander angeordnet. Das Lichtstrahlenbündel der LED wird am Abtastgitter 3 in zwei erste Beugungsordnungen -1 und +1 aufgespalten, die symmetrisch zum einfallenden Lichtstrahlenbündel verlaufen.

Durch das oben genannte Verhältnis der Teilungsperioden von Abtastgitter 3 zu Maßstabgitter 4 entstehen am Maßstabgitter 4, das als Reflexionsmaßstab ausgebildet ist, zwei gebeugte Teilstrahlen-Bündel, die - in Strichrichtung betrachtet - genau oder näherungsweise in sich zurücklaufen.

Diese am Maßstab 4 gebeugten Teilstrahlenbündel werden durch nochmalige Beugung am Abtastgitter 3 zur Interferenz gebracht. Für den Fall TP2/TP1≈2:1 interferieren diese Teilstrahlenbündel durch Beugung am Abtastgitter 3 in leicht unterschiedliche Richtungen und erzeugen in der Brennebene einer Linse ein Interferenz-Streifensystem, aus welchem mittels eines strukturierten Detektors die gewünschten phasenversetzten Ausgangssignale abgeleitet werden können.

Für den Fall TP2/TP1=2:1 interferieren diese Teilstrahlenbündel durch Beugung am Abtastgitter 3 in exakt gleiche Richtungen und erzeugen somit bei Bewegung des Maßstabgitters 4 relativ zum Abtastgitter 3 Intensitätsmodulationen in den resultierenden Signalstrahlenbündeln J₀, J₊₁, J₋₁ deren gegenseitiger Phasenversatz, vorzugsweise 120°, durch geeignete Ausgestaltung des Abtastgitters 3 erreicht wird.

Diese Alternative entspricht der Darstellung in Figur 1.

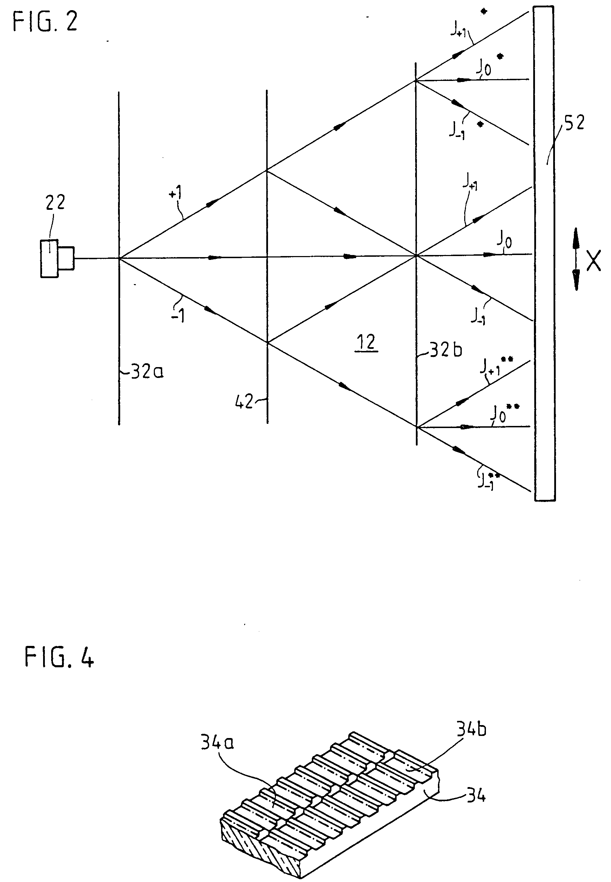

Das schematische optische Schaubild in Figur 2 zeigt einen aufgefalteten Strahlengang eines Dreigitterschrittgebers 12. Hier sind das erste Gitter 32a und das dritte Gitter 32b räumlich getrennt und die Funktionen als Aufspaltgitter 32a und als Vereinigungsgitter 32b leichter erkennbar.

Ein von einer LED 22 ausgesandtes Lichtstrahlenbündel fällt senkrecht auf das erste Gitter 32a, an dem durch Beugung Teilstrahlenbündel der 0. und der ±1.Ordnungen erzeugt werden. Diese Teilstrahlenbündel treffen auf ein Maßstabgitter 42, an dem sie erneut gebeugt werden. Die zur Gitternormalen hingebeugten Teilstrahlenbündel treffen am Vereinigungsgitter 32b aufeinander, wo sie unter erneuter Beugung zur Interferenz kommen.

Zwischen der LED 22 und dem ersten Gitter 32a kann ein Polarisator vorgesehen sein.

Um die Beugungseffizienten zu optimieren wird zwischen den Gittern 32a und 42 ein λ /2-Plättchen vorgesehen.

Die zeitlichen Kohärenzeigenschaften der Lichtquelle 22 sind derart, daß das Teilstrahlenbündel der 0. Beugungsordnung des Aufspaltgitters 32a nicht zur Interferenz beiträgt, da es zwischen den drei Gittern 32a, 42 und 32b eine andere optische Weglänge zurücklegt, wie die beiden Teilstrahlenbündel der ±1. Beugungsordnungen.

Die räumlichen Kohärenzeigenschaften der Lichtquelle 22 sind derart, daß die am Maßstabgitter 42 aus den Teilstrahlenbündeln der ±1. Beugungsordnungen des Aufspaltgitters 32a hervorgegangenen Teilstrahlenbündel der 0. Beugungsordnungen ebenfalls nicht zur Interferenz beitragen, da sie mit Versatz in Meßrichtung X am Vereinigungsgitter 32b auftreffen. Es gelangen somit nur diejenigen Teilstrahlenbündel zur Interferenz, welche sowohl gleich lange optische Wege zwischen den Gittern durchlaufen als auch am Vereinigungsgitter 32b ohne Versatz in Meßrichtung X überlagert werden.

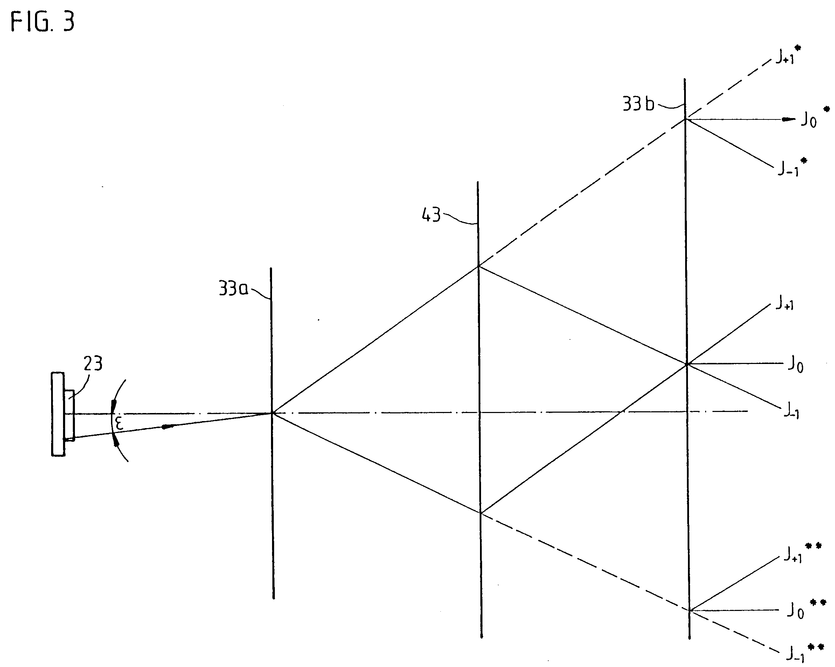

In Figur 3 ist ein optisches Schaubild dargestellt, anhand dessen die Verhältnisse bei Beleuchtung unter dem Winkel ε - Lichtstrahlenbündel, das von einem emittierenden Punkt einer ausgedehnten Lichtquelle 23 ausgeht - verdeutlicht werden.

Wie leicht erkennbar, bleiben die optischen Weglängen der signalbildenden Teilstrahlenbündel (Parallelogramm) gleich; diese Teilstrahlenbündel erzeugen somit unabhängig vom Beleuchtungswinkel ε Interferenzen gleicher Phase.

Die optischen Weglängen der am Maßstabsgitter 43 aus den Teilstrahlenbündeln der ±1. Beugungsordnungen des Aufspaltgitters 33a hervorgegangenen Teilstrahlenbündel der 0. Beugungsordnungen sind dagegen für unterschiedliche Beleuchtungswinkel verschieden.

Eine Mischung vieler Einfallsrichtungen durch eine ausgedehnte Lichtquelle führt damit zu einer Überlagerung von Interferenzen beliebiger Phase.

Aus diesem Grund erzeugen die Teilstrahlenbündel J₀*, J₊₁*, J₋₁* und J₀**, J₊₁**, J₋₁** nur einen konstanten Gleichlichtanteil auf dem Detektor.

Da bei dieser Ausführungsform das erste und das letzte Gitter nicht körperlich identisch sind, können ihre Gitterparameter so gewählt werden, daß sie ihre Aufgaben als Aufspaltgitter und als Vereinigungsgitter optimal erfüllen können.

Diese Optimierung ist auch bei Auflichtmeßeinrichtungen möglich, wenn das Abtastgitter 3 aus Figur 1 durch eine Abtastplatte 34 ersetzt wird, wie sie in Figur 4 dargestellt ist. Die Abtastplatte 34 weist für diesen Anwendungsfall zwei Zonen mit unterschiedlichen Gitterstrukturen 34a und 34b auf, die für ihre Aufgaben als Aufspaltgitter 34a und Vereinigungsgitter 34b optimiert sind.

Mit einer Längen- oder Winkelmeßeinrichtung gemäß der Erfindung lassen sich also unter der Bedingung, daß die Teilungsperiode TP1 des Maßstabgitters 4 kleiner ist als die Wellenlänge des verwendeten Lichtes, allein durch die Kohärenzeigenschaften der Lichtquelle 2 oberwellenfreie Signale mit der Periode TP1/2 erzeugen.

Phasenverschobene Signale können außer durch geeignete Dimensionierung des Abtastgitters oder durch Auswerten eines Interferenzstreifensystems mittels strukturierten Detektors auch polarisationsoptisch gewonnen werden.

## Patentansprüche

1. Interferentiell arbeitende Längen- oder Winkelmeßeinrichtung mit mehreren in Meßrichtung relativ zueinander verschiebbaren Gittern, die als Abtast- und als Maßstabgitter ausgebildet sind und die von einer Lichtquelle kommendes Licht beugen und ferner die gebeugten Teilstrahlenbündel zur Interferenz bringen, wobei die durch Interferenz entstehenden Intensitätsmodulationen der Teilstrahlenbündel durch wenigstens einen Detektor in zueinander phasenverschobene elektrische Signale umgewandelt werden, dadurch gekennzeichnet, daß das Maßstabgitter (4; 42) eine Teilungsperiode (TP1) aufweist, die kleiner ist, als die Wellenlänge (λ) des Lichtes, und daß das Abtastgitter (3; 32a, 32b; 33a, 33b) eine Teilungsperiode (TP2) aufweist, die näherungsweise oder exakt doppelt so groß ist, wie die Teilungsperiode (TP1) des Maßstabgitters (4), und die größer als die Wellenlänge (λ) des Lichtes ist, und daß die zeitlichen Kohärenzeigenschaften der Lichtquelle (2; 22) Interferenz nur von solchen Teilstrahlenbündeln zulassen, die zwischen den Gittern (3, 4; 32a, 32b) gleich lange optische Wege zurücklegen und daß die räumlichen Kohärenzeigenschaften der Lichtquelle (2; 22) Interferenz nur von solchen Teilstrahlenbündeln zulassen, die beim letzten Gitterdurchtritt ohne Versatz in Meßrichtung (X) überlagert werden.

2. Längen- oder Winkelmeßeinrichtung nach Anspruch 1, dadurch gekennzeichnet, daß am letzten Gitter (3, 32b) nur die Teilstrahlenbündel der ±1.Ordnung miteinander interferieren und die Teilstrahlenbündel der 0. und 2.Ordnungen miteinander interferieren.

3. Längen oder Winkelmeßeinrichtung nach Anspruch 1, dadurch gekennzeichnet, daß zur Polarisierung des Lichtes in Strichrichtung der Gitter oder senkrecht dazu ein Polarisator vorhanden ist.

4. Längen- oder Winkelmeßeinrichtung nach Anspruch 3, dadurch gekennzeichnet, daß zur Drehung der Polarisationsebene zwischen den Gittern ein λ/2-Plättchen vorhanden ist.

5. Längen- oder Winkelmeßeinrichtung nach Anspruch 1, dadurch gekennzeichnet, daß die Abbildung der Lichtquelle (2; 22) auf dem Detektor (5; 52) mittels eines konvergenten Beleuchtungsstrahlenganges erfolgt.

6. Längen- oder Winkelmeßeinrichtung nach Anspruch 1, dadurch gekennzeichnet, daß die Gitterparameter des Abtastgitters (3; 32b; 33) so variieren, daß phasenverschobene Signale erzeugbar sind.

7. Längen- oder Winkelmeßeinrichtung nach Anspruch 1, dadurch gekennzeichnet, daß polarisationsoptische Mittel vorhanden sind, mittels denen phasenverschobene Signale erzeugbar sind.

8. Längen- oder Winkelmeßeinrichtung nach Anspruch 1, dadurch gekennzeichnet, daß ein strukturierter Detektor (5; 52) vorhanden ist, mittels dem durch Auswertung eines Interferenzstreifen-Musters phasenverschobene Signale erzeugbar sind.

9. Längen- oder Winkelmeßeinrichtung nach Anspruch 1, dadurch gekennzeichnet, daß am ersten Gitter (3; 32a) eine Aufspaltung in Teilstrahlenbündel (+1; -1) erfolgt, die symmetrisch zum einfallenden Lichtstrahl verlaufen.

10. Längen- oder Winkelmeßeinrichtung nach Anspruch 1, dadurch gekennzeichnet, daß das erste bzw. dritte Gitter Aufspalt- bzw. Abtastgitter (3; 32a bzw. 32b) und das zweite Gitter das Maßstabgitter (4; 42) einer inkrementalen Wegmeßeinrichtung (1; 12) verkörpern.

11. Längen- oder Winkelmeßeinrichtung nach Anspruch 10, dadurch gekennzeichnet, daß das erste und dritte Gitter (3) transparent und körperlich identisch sind, und daß das zweite Gitter reflektierend als Maßstabgitter (4) einer Auflichtmeßeinrichtung (1) ausgebildet ist.

12. Längen- oder Winkelmeßeinrichtung nach Anspruch 10, dadurch gekennzeichnet, daß das erste und dritte Gitter auf einer gemeinsamen Abtastplatte (33) angeordnet sind, aber unterschiedliche Gitterparameter (33a; 33b) aufweisen.

13. Längen- oder Winkelmeßeinrichtung nach Anspruch 1, dadurch gekennzeichnet, daß alle Gitter (32a; 42; 32b) als transparente Gitter einer Durchlichtmeßeinrichtung (12) ausgebildet sind.

14. Längen- oder Winkelmeßeinrichtung nach Anspruch 13, dadurch gekennzeichnet, daß das erste Gitter als Aufspaltgitter (32a) und das dritte Gitter als Vereinigungsgitter (32b) ausgebildet ist und daß sie unterschiedliche Gitterparameter aufweisen.

15. Längen- oder Winkelmeßeinrichtung nach einem der vorhergehenden Ansprüche, dadurch gekennzeichnet, daß als Maßstab- und/oder Abtastgitter Phasen- und/oder Amplitudengitter verwendet werden.

16. Längen- oder Winkelmeßeinrichtung nach einem der vorhergehenden Ansprüche, dadurch gekennzeichnet, daß als Maßstab- und Abtastgitter sogenannte Kreuzgitter verwendet werden.

17. Längen- oder Winkelmeßeinrichtung nach Anspruch 16, dadurch gekennzeichnet, daß mit Hilfe der Kreuzgitter eine Meßeinrichtung für zwei Dimensionen gebildet wird.

## Claims

1. Interference length or angle measuring device with several gratings displaceable relative to one another in the direction of measurement, which are constructed as scanning gratings and as scale gratings and which diffract light coming from a light source and moreover bring the diffracted bundle of component beams to interference, in which case the intensity modulations of the bundles of component beams occurring as a result of interference are converted by at least one detector into electrical signals that are phase-shifted relative to one another, characterised in that the scale grating (4; 42) has a graduation cycle (TP1) which is smaller than the wavelength (λ) of the light; and that the scanning grating (3; 32a, 32b; 33a, 33b) has a graduation cycle (TP2) which is approximately or exactly double the size of the graduation cycle (TP1) of the scale grating (4) and which is larger than the wavelength (λ) of the light; and that the temporal coherence properties of the light source (2; 22) only permit interference from those bundles of component beams which cover equally long optical paths between the gratings (3, 4; 32a, 32b); and that the spatial coherence properties of the light source (2; 22) only permit interference from those bundles of component beams which are superposed without displacement in the direction of measurement (X) on passage through the last grating.

2. Length or angle measuring device according to Claim 1, characterised in that on the last grating (3, 32b) only the bundles of component beams of the ± 1st order interfere with one another and the bundles of component beams of the 0 order and second order interfere with one another.

3. Length or angle measuring device according to Claim 1, characterised in that a polariser is provided for polarisation of the light in the line direction of the gratings or perpendicular thereto.

4. Length or angle measuring device according to Claim 3, characterised in that a half-wave plate is provided for rotation of the polarisation plane between the gratings.

5. Length or angle measuring device according to Claim 1, characterised in that the light source (2; 22) is imaged on the detector (5; 52) by means of a convergent illuminating beam.

6. Length or angle measuring device according to Claim 1, characterised in that the grating parameters of the scanning grating (3; 32b; 33) vary such that phase-shifted signals may be generated.

7. Length or angle measuring device according to Claim 1, characterised in that optical polarisation means are provided by means of which phase-shifted signals may be generated.

8. Length or angle measuring device according to Claim 1, characterised in that a structured detector (5; 52) is provided by means of which phase-shifted signals may be generated by evaluation of an interference fringe pattern.

9. Length or angle measuring device according to Claim 1, characterised in that on the first grating (3; 32a) splitting into bundles of component beams (+1; -1) occurs which extend symmetrically to the incident beam of light.

10. Length or angle measuring device according to Claim 1, characterised in that the first or second grating embodies splitting or scanning gratings (3; 32a or 32b) and the second grating embodies the scale grating (4; 42) of an incremental distance measurement means (1; 12).

11. Length or angle measuring device according to Claim 10, characterised in that the first and third grating (3) are transparent and structurally identical, and that the second grating is reflectively constructed as a scale grating (4) of a reflected light measurement system (1).

12. Length or angle measuring device according to Claim 10, characterised in that the first and third grating are arranged on a common scanning plate (33), but have different grating parameters (33a; 33b).

13. Length or angle measuring device according to Claim 1, characterised in that all the gratings (32a; 42; 32b) are constructed as transparent gratings of a transmitted light measurement system (12).

14. Length or angle measuring device according to Claim 13, characterised in that the first grating is constructed as a splitting grating (32a) and the third grating is constructed as a uniting grating (32b), and that they have different grating parameters.

15. Length or angle measuring device according to one of the preceding claims, characterised in that phase and/or amplitude gratings are used as scale and/or scanning gratings.

16. Length or angle measuring device according to one of the preceding claims, characterised in that so-called cross gratings are used as scale and/or scanning gratings.

17. Length or angle measuring device according to Claim 16, characterised in that a measuring system for two dimensions is formed by means of the cross grating.

## Revendications

1. Dispositif de mesure de longueur ou d'angle par interférence comportant plusieurs réseaux mobiles l'un par rapport à l'autre dans la direction de mesure, lesquels réseaux sont agencés en réseau de balayage et en réseau de mesure, diffractent la lumière provenant d'une source lumineuse et amènent en interférence les faisceaux de rayons partiels diffractés, les modulations en intensité des faisceaux partiels obtenues par interférence étant transformées par au moins un détecteur en signaux électriques mutuellement déphasés, caractérisé par le fait que le réseau de mesure (4; 42) présente une période de division (TP1) qui est inférieure à la longueur d'onde (λ) de la lumière, par le fait que le réseau de balayage (3; 32a, 32b; 33a, 33b) présente une période de division (TP2) qui est sensiblement ou exactement égale au double de la période de division (TP1) du réseau de mesure (4) et est supérieure à la longueur d'onde (X) de la lumière, par le fait que les propriétés de cohérence dans le temps de la source lumineuse (2; 22) permettent seulement l'interférence des faisceaux partiels parcourant des trajets optiques de même longueur entre les réseaux (3, 4; 32a, 32b) et par le fait que les propriétés de cohérence dans l'espace de la source lumineuse (2; 22) permettent seulement l'interférence des faisceaux partiels qui ont traversé le dernier réseau sans décalage dans la direction de mesure (X).

2. Dispositif de mesure de longueur ou d'angle selon la revendication 1, caractérisé par le fait qu'au niveau du dernier réseau (3, 32b) seul les faisceaux partiels d'ordre ± 1 interfèrent entre eux et que les faisceaux partiels d'ordre 0 et 2 interfèrent entre eux.

3. Dispositif de mesure de longueur ou d'angle selon la revendication 1, caractérisé par le fait qu'il comporte le réseau pour la polarisation de la lumière dans la direction des traits ou un polarisateur pour la polarisation perpendiculairement auxdits traits.

4. Dispositif de mesure de longueur ou d'angle selon la revendication 3, caractérisé par le fait qu'il comporte, disposée entre les réseaux, une lame λ/2 pour faire tourner le plan de polarisation.

5. Dispositif de mesure de longueur ou d'angle selon la revendication 1, caractérisé par le fait que l'image de la source lumineuse (2; 22) sur le détecteur (5; 52) est formée grâce à un trajet convergent de rayons lumineux.

6. Dispositif de mesure de longueur ou d'angle selon la revendication 1, caractérisé par le fait que les paramètres de réseau du réseau de balayage (3; 32b; 33) sont adaptés de manière à permettre la production de signaux déphasés.

7. Dispositif de mesure de longueur ou d'angle selon la revendication 1, caractérisé par le fait qu'il comporte des moyens optiques de polarisation à l'aide desquels des signaux déphasés sont produits.

8. Dispositif de mesure de longueur ou d'angle selon la revendication 1, caractérisé par le fait qu'il comporte un détecteur (5; 52) structuré au moyen duquel des signaux déphasés sont produits par exploitation d'un dessin de bandes d'interférence.

9. Dispositif de mesure de longueur ou d'angle selon la revendication 1, caractérisé par le fait qu'une séparation en faisceaux de rayons partiels (+1; -1) est opérée au niveau du premier réseau (3; 32a), lesquels faisceaux partiels se propagent de manière symétrique par rapport au rayon lumineux incident.

10. Dispositif de mesure de longueur ou d'angle selon la revendication 1, caractérisé par le fait que les premier et troisième réseaux sont des réseaux de division et de balayage (3; 32a et 32b) et le deuxième réseau est le réseau de mesure (4; 42) d'un dispositif de mesure incrémental (1; 12) de déplacement.

11. Dispositif de mesure de longueur ou d'angle selon la revendication 10, caractérisé par le fait que les premier et troisième réseaux (3) sont transparents et physiquement identiques et que le deuxième réseau est agencé sous forme de réseau de mesure (4) réfléchissant d'un dispositif de mesure à lumière réfléchie.

12. Dispositif de mesure de longueur ou d'angle selon la revendication 10, caractérisé par le fait que les premier et troisième réseaux sont disposés sur une plaque de balayage (33) commune mais présentent des paramètres de réseau (33a, 33b) différents.

13. Dispositif de mesure de longueur ou d'angle selon la revendication 1, caractérisé par le fait que tous les réseaux (32a; 42; 32b) sont des réseaux transparents d'un dispositif de mesure (12) à lumière transmise.

14. Dispositif de mesure de longueur ou d'angle selon la revendication 13, caractérisé par le fait que le premier réseau est agencé sous forme de réseau de division (32a) et que le troisième réseau est agencé sous forme de réseau de recombinaison (32b) et que ceux-ci présentent des paramètres de réseau différents.

15. Dispositif de mesure de longueur ou d'angle selon l'une des revendications précédentes, caractérisé par le fait que l'on utilise comme réseau de mesure et/ou comme réseau de balayage des réseaux de phase et/ou des réseaux d'amplitude.

16. Dispositif de mesure de longueur ou d'angle selon l'une des revendications précédentes, caractérisé par le fait que l'on utilise comme réseau de mesure et/ou comme réseau de balayage des réseaux dits croisés

17. Dispositif de mesure de longueur ou d'angle selon la revendication 16, caractérisé par le fait qu'à l'aide des réseaux croisés on forme un dispositif de mesure pour deux dimensions.
